# EUROPÄISCHE PATENTSCHRIFT

(11) **EP 0 950 478 B1**
(45) Veröffentlichungstag und Bekanntmachung des Hinweises auf die Patenterteilung: **03.07.2002**
(21) Anmeldenummer: 99107522.7
(22) Anmeldetag: 15.04.1999
(51) Int. Cl.: B25J 19/00

(54) **Roboter mit zumindestens teilweise aussenseitig verlaufenden Kabeln**
Robot having cables running at least partially on the outside of the robot
Robot ayant des cables situés au moins partiellement à l'extérieur du robot

(30) Priorität: 17.04.1998 DE 19817605
(43) Veröffentlichungstag der Anmeldung: 20.10.1999
(73) Patentinhaber: KUKA Roboter GmbH, 86165 Augsburg (DE)
(72) Erfinder: Berninger,Alwin, 86159 Augsburg (DE); Hartmann, Georg, 86551 Aichach (DE)
(74) Vertreter: Lempert, Jost, Dipl.-Phys. Dr. rer.nat.

(56) Entgegenhaltungen:
- DE-U- 9 103 497
- DE-U- 9 406 405
- PATENT ABSTRACTS OF JAPAN vol. 1995, no. 09, 31. Oktober 1995 (1995-10-31) & JP 07 156093 A (FANUC LTD), 20. Juni 1995 (1995-06-20)

## Beschreibung

Die Erfindung betrifft einen Roboter mit zumindestens teilweise außenseitig verlaufenden Kabeln, insbesondere Versorgungskabeln von Werkzeugen des Roboters, wie eines Schweißwerkzeugs.

Ein Roboter weist mehrere relativ zueinander verschwenkbare Teile, insbesondere Roboterarme auf. Hierbei kommt es zu Distanzänderungen zwischen einzelnen Punkten des Roboters. Dies ist bei der Führung von Versorgungskabeln für Elemente und insbesondere Werkzeuge des Roboters zu beachten. Diese müssen einerseits Längenveränderungen aufnehmen können, andererseits bei der Bewegung des Roboters möglichst wenig belastet werden, so daß sie eine hohe Standfestigkeit haben und nicht vorzeitig beschädigt werden.

Die JP 7-156093 zeigt einen gattungsgemäßen Roboter mit einem am Roboterkörper um eine horizontale Achse schwenkbar angelenkten Roboterarm. Dieser trägt einen Zylinder als Wickelfläche für einen flexiblen Kabelschlapp. Der

Kabelschlapp hängt an der Längsseite des Roboterkörpers herunter und kann sich - mit der Bewegung des Roboterarms - in einer Schlaufe frei auf und ab bewegen.

Der Erfindung liegt daher die Aufgabe zugrunde, einen gattungsgemäßen Roboter dahingehend weiterzubilden, daß eine verbesserte, für die Kabel selbst belastungsfreie Kabelführung, die eine hohe Längenreserve und damit einen guten Längenausgleich ermöglicht, gegeben ist.

Erfindungsgemäß wird die genannte Aufgabe bei einem Roboter der eingangs genannten Art durch das Kennzeichen des Anspruchs 1 gelöst.

In bevorzugter Ausgestaltung ist dabei vorgesehen, daß am um die Achse des Roboters verschwenkbaren Roboterarm eine Kabeltrennstelle angeordnet ist und die von diesem fortführenden Kabel im wesentlichen kreisförmig geführt sind. Hierdurch ergibt sich die Verbesserung, daß nicht das gesamte vom Sockel des Roboters zu den von einem Kabel versorgten Elementen, wie Motoren oder einem Werkzeug des Roboters, führende Kabel ausgewechselt werden muß, wenn eine Auswechslung nötig ist, beispielsweise wenn das Werkzeug des Roboters ausgetauscht wird. Es reicht vielmehr, lediglich den Kabelteil von der Kabel-Trennstelle zum Werkzeug bzw. zu anderen Elementen, deren Versorgungskabel über die Kabel-Trennstelle getrennt sind, auszuwechseln.

In weiterer bevorzugter Ausgestaltung ist vorgesehen, daß die kreisförmige Schlaufe der Kabel über mehr als 270° verläuft, wobei insbesondere die Kabel über einen Umfangswinkel von mindestens 300° kreisförmig geführt sind.

Eine Weiterbildung sieht vor, daß die Kabel in einem Schutzschlauch geführt sind, wobei am Beginn und am Ende der kreisförmigen Führung die Kabel in Schellen geführt sind. Hierdurch wird die kreisförmige Schlaufe als Längenreserve zuverlässig gehalten. Um zu verhindern, daß die Kabel im Bereich zwischen der zweiten, vorderen Führungsschelle und ihrem Versorgungsende, beispielsweise am Werkzeug, durchhängen, ist in weiterer bevorzugter Ausgestaltung vorgesehen, daß die Kabel im kreisförmigen Schlaufenbereich von einer unter Druck stehenden Schraubenfeder umgeben sind, wobei insbesondere die Schraubenfeder an den Schellen als Widerlagern anliegt.

Durch die Erfindung wird eine kostengünstige Energiezuführung, insbesondere zu Werkzeugen, bei geringem Platzbedarf ermöglicht, wobei Verschleißteile getrennt sind, so daß bei auftretendem Verschleiß ein getrenntes Auswechseln möglich ist.

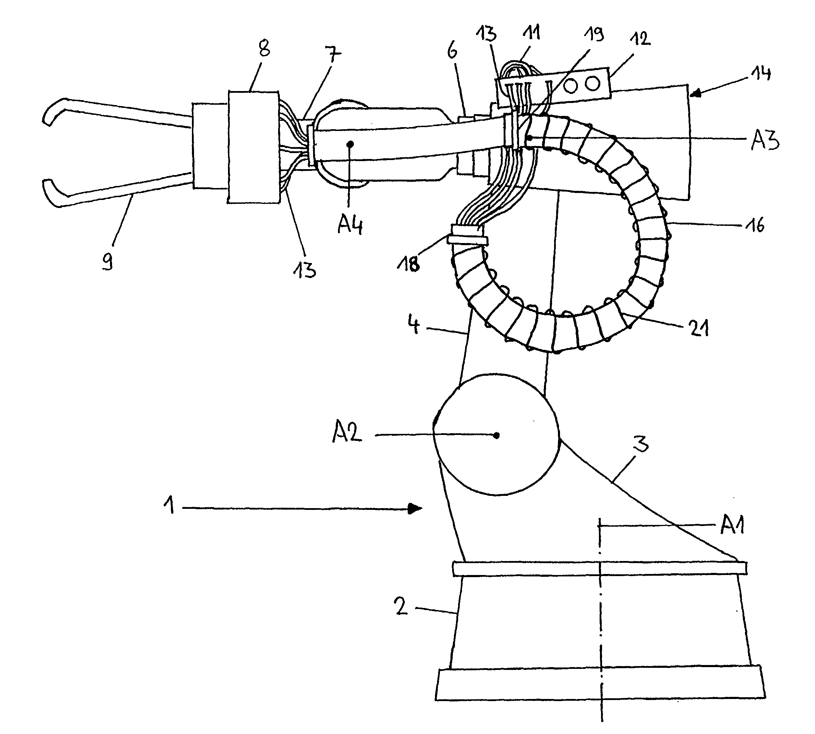

Weitere Vorteile und Merkmale der Erfindung ergeben sich aus den Ansprüchen und aus der nachfolgenden Beschreibung, in der ein bevorzugtes Ausführungsbeispiel eines erfindungsgemäß ausgebildeten Roboters im einzelnen erläutert ist. Dabei zeigt die einzige Figur
einen erfindungsgemäß ausgestalteten Roboter in Seitenansicht.

Der erfindungsgemäß ausgestaltete Roboter 1 weist einen Sockel 2 mit einem auf diesem aufsitzenden, um die erste (vertikale) Achse A1 des Roboters verschwenkbaren Karussell 3 auf. Am Karussell ist um eine zweite, horizontale Achse A2 ein erster Roboterarm 4 verschwenkbar angelenkt, der einen weiteren Roboterarm 6 trägt, der um eine zweite horizontale Achse A3 verschwenkbar ist. Der Roboterarm 6 trägt, ebenfalls um eine Achse, die A4-Achse, verschwenkbar eine Roboterhand 7 mit einem Werkzeug 8, das hier ein mit Schweißzangen 9 versehenes Schweißwerkzeug ist.

Von dem Sockel 2 führen auf der dem Betrachter der Figur abgewandten Seite des Roboters Kabel 11 nach oben bis zum Arm 6; die Kabel 11 sind von ihrem Endpunkt oberhalb des Roboterarms 6 in der Figur ersichtlich. Auf dem Roboterarm 6 ist eine Kabeltrennstelle 12 angeordnet, die als Klemmenkasten oder dgl. ausgebildet sein kann. Von der Kabel-Trennstelle 12 führen Versorgungskabel 13 zum Werkzeug 8. Die Versorgungskabel 13 sind nicht direkt auf kürzestem Wege zum Werkzeug 8 geführt, sondern verlaufen in einer kreisförmigen Schlaufe zunächst nach unten, dann zum rückwärtigen, dem Werkzeug 8 abgewandten Ende 14 des Roboterarms 6, nach oben und dann unterhalb der Kabel-Trennstelle 12 nach vorne zum Werkzeug 8. Die Kabel 13 sind dabei kreisförmig über einen Winkel von mehr als 300° geführt. Die Kabel 13 sind insbesondere im Bereich ihrer kreisförmigen Führung in einem flexiblen Führungsschlauch 16 geführt. Der Führungsschlauch 16 wird an seinem vorderen Eintrittsende für die Kabel 13 durch eine Schelle 18 und am Ende des kreisförmigen Führungsbereichs durch eine Schelle 19 jeweils am Arm 6 gehalten. Die Schelle 18 kann, wie in der Figur dargestellt, auch schwimmend angeordnet sein. Zwischen den Schellen 18 und 19 sind die Kabel von einer Schraubenfeder umgeben, die zwischen den Schellen 18, 19 verspannt ist und derart die Führung der Kabel im kreisförmigen Bereich zu längen versucht, so daß die Kabellänge zwischen Werkzeug und Schelle 19 jeweils minimiert wird und das Kabel in diesem Bereich nicht durchhängt und damit nicht stören kann.

## Patentansprüche

1. Roboter mit zumindestens teilweise außenseitig verlaufenden Kabeln, insbesondere Versorgungskabeln von Werkzeugen des Roboters, wie eines Schweißwerkzeugs, **dadurch gekennzeichnet, daß** die Kabel (13) auf der Höhe des um die Achse 3 (A3) des Roboters (1) verschwenkbaren Roboterarms (6) im wesentlichen in einer kreisförmigen Schlaufe geführt sind.

2. Roboter nach Anspruch 1, **dadurch gekennzeichnet, daß** an dem um die Achse 3 (A3) des Roboters (1) verschwenkbaren Roboterarm (6) eine Kabeltrennstelle (12) angeordnet ist und die von dieser fortführenden Kabel (13) im wesentlichen kreisförmig geführt sind.

3. Roboter nach Anspruch 1 oder 2, **dadurch gekennzeichnet, daß** die kreisförmige Schlaufe der Kabel (13) über mehr als 270° verläuft.

4. Roboter nach Anspruch 3, **dadurch gekennzeichnet, daß** die Kabel (13) über einen Umfangswinkel von mindestens 300° kreisförmig geführt sind.

5. Roboter nach einem der vorangehenden Ansprüche, **dadurch gekennzeichnet, daß** die Kabel in einem Schutzschlauch (16) geführt sind.

6. Roboter nach einem der vorangehenden Ansprüche, **dadurch gekennzeichnet, daß** am Beginn und am Ende der kreisförmigen Führung die Kabel (13) in Schellen (18, 19) geführt sind.

7. Roboter nach einem der vorangehenden Ansprüche, **dadurch gekennzeichnet, daß** die Kabel im kreisförmigen Schlaufenbereich von einer unter Druck stehenden Schraubenfeder (21) umgeben sind.

8. Roboter nach Anspruch 7, **dadurch gekennzeichnet, daß** die Schraubenfeder (17) an den Schellen (18, 19) als Widerlagern anliegt.

## Claims

1. Robot having cables which extend at least partially on the outside, in particular operation cables for robot tools such as a welding tool, **characterized in that** the cables (13) are guided in a substantially circular loop at the height of a robot arm (6) which can pivot about an,axis 3 (A3) of the robot (1).

2. Robot according to claim 1, **characterized in that** a cable separation location (12) is disposed on that robot arm (6) which pivots about the axis 3 (A3) of the robot (1), wherein the cables (13) extending therefrom are guided in a substantially circular-shaped fashion.

3. Robot according to claim 1 or 2, **characterized in that** the circular-shaped cable loop (13) extends through more than 270°.

4. Robot according to claim 3, **characterized in that** the cables (13) are guided in a circular fashion through a circumference angle of at least 300°.

5. Robot according to any one of the preceding claims, **characterized in that** the cables are guided in a protective tube (16).

6. Robot according to any one of the preceding claims, **characterized in that** the cables (13) are guided in collars (18, 19) at the beginning and at the end of the circular guide.

7. Robot according to any one of the preceding claims, **characterized in that** the cables are surrounded, in the circular shaped looped region, by a helical spring (21) under compression.

8. Robot according to claim 7, **characterized in that** the helical spring (17) abuts on the collars (18, 19).

## Revendications

1. Robot comprenant des câbles situés au moins partiellement à l'extérieur, en particulier des câbles d'alimentation d'outils du robot, par exemple un outil à souder, **caractérisé en ce que** les câbles (13) sont guidés sensiblement le long d'une boucle circulaire à hauteur du bras de robot (6) pivotant autour de l'axe 3 (A3) du robot (1).

2. Robot selon la revendication 1, **caractérisé en ce qu'**un point de séparation (12) des câbles est disposé sur le bras de robot (6) pivotant autour de l'axe 3 (A3) du robot (1) et que les câbles s'éloignant de ce point sont guidés de manière sensiblement circulaire.

3. Robot selon la revendication 1 ou 2, **caractérisé en ce que** la boucle circulaire des câbles (13) s'étend sur plus de 270°.

4. Robot selon la revendication 3, **caractérisé en ce que** les câbles (13) sont guidés de manière circulaire sur un angle inscrit d'au moins 300°.

5. Robot selon l'une quelconque des revendications précédentes, **caractérisé en ce que** les câbles sont guidés dans une gaine tubulaire de protection (16).

6. Robot selon l'une quelconque des revendications précédentes, **caractérisé en ce qu'**au début et à la fin du guidage circulaire, les câbles (13) sont guidés dans des brides (18,19).

7. Robot selon l'une quelconque des revendications précédentes, **caractérisé en ce que** dans la zone de la boucle circulaire, les câbles sont entourés d'un ressort à boudin (21) comprimé.

8. Robot selon la revendication 7, **caractérisé en ce que** le ressort à boudin (21) vient en contact avec les brides (18,19) faisant fonction de butée.
